# EUROPÄISCHE PATENTSCHRIFT

(11) **EP 3 033 546 B1**
(45) Veröffentlichungstag und Bekanntmachung des Hinweises auf die Patenterteilung: **15.01.2020**
(21) Anmeldenummer: 14750177.9
(22) Anmeldetag: 05.08.2014
(51) Int. Cl.: F16H 1/16, F16H 57/02, F16H 57/021, F16H 57/022, F16H 57/12, F16H 57/039

(54) **GETRIEBE-ANTRIEBSEINRICHTUNG UND KOMFORTANTRIEB FÜR EIN KRAFTFAHRZEUG**
TRANSMISSION DRIVE DEVICE AND COMFORT DRIVE FOR A MOTOR VEHICLE
DISPOSITIF D'ENTRAÎNEMENT DE TRANSMISSION ET ENTRAÎNEMENT D'ASSISTANCE POUR VÉHICULE AUTOMOBILE

(30) Priorität: 14.08.2013 DE 102013216130
(43) Veröffentlichungstag der Anmeldung: 22.06.2016
(73) Patentinhaber: Robert Bosch GmbH, 70442 Stuttgart (DE)
(72) Erfinder: HUCK, Thomas, 77836 Rheinmuenster (DE); TASCH, Franz, 76287 Rheinstetten (DE); WEHRLE, Andreas, 77770 Durbach (DE)
(86) Internationale Anmeldenummer: PCT/EP2014/066765
(87) Internationale Veröffentlichungsnummer: WO 2015/022227

(56) Entgegenhaltungen:
- DE-A1-102006 061 700
- JP-U- S51 163 341
- US-A- 3 170 739

## Beschreibung

### Stand der Technik

Die Erfindung betrifft eine Getriebe-Antriebseinrichtung nach dem Oberbegriff des Anspruchs 1. Ferner betrifft die Erfindung einen Komfortantrieb für ein Kraftfahrzeug unter Verwendung einer erfindungsgemäßen Getriebe-Antriebseinrichtung.

Eine Getriebe-Antriebseinrichtung nach dem Oberbegriff des Anspruchs 1 ist aus der DE 10 2006 061 700 A1 der Anmelderin bekannt. Die bekannte Getriebe-Antriebseinrichtung findet Verwendung in einem Komfortantrieb eines Kraftfahrzeugs, z.B. in einem Fensterheberantrieb, einem Sitzverstellungsantrieb, einem Schiebedachantrieb oder ähnlichem. Ein Erfordernis einer derartigen Getriebe-Antriebseinrichtung ist es, dass diese unter einer definierten Last im Stillstandsfall in ihrer Position verharrt, um eine unerwünschte Verstellung des zu verstellenden Elements (d.h. der Fensterscheibe, des Schiebedachs, des Sitzes oder ähnlichem) zu vermeiden. Im Stillstandsfall ist der elektrische Antrieb der Getriebe-Antriebseinrichtung stromlos geschaltet. Der größte Anteil der Hemmung wird dabei über die Getriebestufe bzw. bei mehrstufigen Getrieben über die Getriebestufen erzeugt. Die geforderte Hemmung im Getriebe macht es erforderlich, dass zum Betreiben der Getriebe-Antriebseinrichtung, d.h. zum Verstellen der Fensterscheibe, des Schiebedachs, des Sitzes oder ähnlichem ein relativ starker elektrischer Antrieb verwendet werden muss, um zunächst die Hemmung überwinden zu können. Mit einem besseren Wirkungsgrad des Getriebes kann der erforderliche Leistungsbedarf bzw. die Baugröße des elektrischen Antriebs der Getriebe-Antriebseinrichtung verringert werden, was unter anderem in gewünschter Art und Weise zu einer leichteren und kompakteren Getriebe-Antriebseinrichtung führt. Trotzdem ist es erforderlich, dass die Getriebe-Antriebseinrichtung im Stillstandsfall die gewünschte Hemmung erzeugt.

Hierzu ist es bei der eingangs erwähnten Schrift bekannt, dass ein ballig ausgebildetes Wellenende an einem Anlaufelement anliegt, das sich wiederum über ein Dämpfungselement in einem Getriebegehäuse abstützt. Hierbei ist das Anlaufelement, das in Form einer Anlaufplatte ausgebildet ist, in einen schrägen Winkel zur Längsachse der Welle angeordnet. Weiterhin ist es in der bekannten Schrift erwähnt, dass sowohl das Anlaufelement als auch das Dämpfungsmittel beim Auftreten von axialen Stößen entlang der Längsachse des Anlaufelements sich entlang einer ebenfalls in dem erwähnten schrägen Winkel angeordneten Führungsschiene axial verstellen lassen. Mittels einer derartigen Einrichtung lässt sich beim Auftreten von Axialkräften auf die Welle, hervorgerufen durch ein von dem zu verstellenden Element in die Getriebe-Antriebseinrichtung eingeleitetes Drehmoment, eine in Abhängigkeit der axialen Kraft zumindest annähernd linear abhängige Gegenkraft erzeugen, die die Selbsthemmung bewirkt. Wünschenswert ist dagegen die Ausbildung einer Getriebe-Antriebseinrichtung, bei der beim Auftreten keiner bzw. relativ geringer Axialkräfte auf die Welle keine bzw. nur eine sehr geringe Selbsthemmung vorhanden ist, während mit zunehmender Axialkraft auf die Welle eine überproportional ansteigende Gegenkraft zur Erzeugung einer ebenfalls überproportional ansteigenden Selbsthemmung erwünscht ist. Dadurch lässt sich im Antriebsfall ein besonders leichter bzw. eine besonders geringe Antriebsleistung aufweisender Antriebsmotor verwenden, der in Verbindung mit einem einen relativ hohen Wirkungsgrad aufweisenden Getriebe eine besonders leichte bzw. kompakt bauende Getriebe-Antriebseinrichtung ermöglicht.

### Offenbarung der Erfindung

Ausgehend von dem dargestellten Stand der Technik liegt der Erfindung die Aufgabe zugrunde, eine Getriebe-Antriebseinrichtung nach dem Oberbegriff des Anspruchs 1 derart weiterzubilden, dass eine mit zunehmender Axialkraft auf die Welle überproportional steigende Selbsthemmung erzeugbar ist, die einer Drehung der Welle entgegenwirkt. Dadurch lässt sich eine besonders leicht und kompakt bauende Getriebe-Antriebseinrichtung realisieren.

Diese Aufgabe wird erfindungsgemäß bei einer Getriebe-Antriebeinseinrichtung mit den Merkmalen des Anspruchs 1 dadurch gelöst, dass das Anlaufelement und/oder das Dämpfungselement derart ausgebildet und/oder angeordnet sind/ist, dass bei zunehmender axialer Kraftbeaufschlagung auf die Welle zumindest ab einer bestimmten Höhe der Kraftbeaufschlagung der Anlagepunkt zwischen dem Anlaufelement und dem Wellenende einen zunehmenden Abstand zur Längsachse der Welle aufweist. Eine derartige Ausbildung ermöglicht es, dass eine überproportional mit der axialen Kraftbeaufschlagung auf die Welle steigende, der Drehung der Welle entgegenwirkende Kraft erzeugbar ist, da sich die Reibkraft, die zwischen der Welle bzw. dem Anlagepunkt des Wellenendes einstellt, aus der Summe der in Längsrichtung der Welle wirkenden Kraft und dem in Abhängigkeit vom Abstand des Anlagepunkts zur Längsachse der Welle sich ergebenden Reibmoments ergibt. Zusätzlich wird auch noch eine senkrecht zur Längsachse der Welle gerichtete Querkraftkomponente erzeugt, die bei Radiallagern zu einer erhöhten Reibung in den Lagern führt, die ebenfalls die Selbsthemmung erhöht.

Vorteilhafte Weiterbildungen der erfindungsgemäßen Getriebe-Antriebseinrichtung sind in den Unteransprüchen aufgeführt.

Zur Realisierung eines zunehmenden Abstands des Anlagepunkts zur Längsachse der Welle wird in einer bevorzugten Ausgestaltung der Erfindung vorgeschlagen, dass das Anlaufelement um eine mit einem Abstand zur Längsachse der Welle angeordnete Achse kippbeweglich ausgebildet ist.

Das Dämpfungselement dient insbesondere zur Geräuschreduzierung beim Umschalten der Drehrichtung des Antriebsmotors der Getriebe-Antriebseinrichtung aufgrund des insbesondere aufgrund von Fertigungstoleranzen vorhandenen Spiels zwischen den einzelnen Bauteilen. Um den Verschleiß der Getriebe-Antriebseinrichtung beim Auftreten von Axialkräften auf die Welle zu reduzieren, ist es vorgesehen, dass das Dämpfungselement auf der dem Wellenende abgewandten Seite des Anlaufelements angeordnet ist, so dass das Anlaufelement (das beispielsweise aus einem besonders verschleißarmen Material besteht) mit dem Wellenende in Kontakt ist.

In konkreter Ausgestaltung zur Realisierung der Kippbewegung wird vorgeschlagen, dass das Anlaufelement eine Anlagefläche aufweist, die dazu ausgebildet ist, ab einer bestimmten Kraftbeaufschlagung an einem ortsfesten Gegenelement zumindest bereichsweise anzuliegen, so dass das Anlaufelement um eine durch die Anlagefläche ausgebildete Achse kippbar ist. Dies bedeutet im Umkehrschluss, dass solange das Anlaufelement noch nicht verkippt wird, der Anlagepunkt zwischen dem Wellenende und Anlaufelement sich insbesondere in der Längsachse der Welle befindet, so dass das angesprochene überproportionale Ansteigen der Selbsthemmung erst ab einem gewissen Punkt bzw. einer gewissen Axialkraft auf die Welle erfolgt, während bei geringeren Axialkräften ein zumindest nahezu lineares Ansteigen der Selbsthemmung erzielt wird.

In konstruktiv bevorzugter Ausgestaltung zur Aufnahme der von der Welle auf das Anlaufelement wirkenden Kräfte wird vorgeschlagen, dass das Anlaufelement in dem Gehäuse mittels wenigstens einer Anlagefläche verdrehsicher angeordnet ist, die an einer Gegenfläche im Gehäuse anliegt.

Zur Sicherstellung einer lagerichtigen Montage des Anlaufelements in dem Gehäuse ist es darüber hinaus vorteilhaft, wenn das Anlaufelement ein Positionierelement zur lagerichtigen Montage im Gehäuse aufweist.

Um Beschädigungen beispielsweise des Dämpfungselements oder des Anlaufelements bei besonders hohen Axialkräften auf die Welle zu vermeiden, kann es vorgesehen sein, dass das Anlaufelement eine Anschlagfläche zur Begrenzung des Kippwinkels des Anlaufelements aufweist.

Die Verbindung zwischen dem Anlaufelement und dem Dämpfungselement erfolgt zumindest über eine Formschlussverbindung. Eine derartige Formschlussverbindung kann beispielsweise durch eine entsprechende Maßtolerierung zwischen dem üblicherweise aus Gummi bestehenden Dämpfungselement und dem Anlaufelement bestehen, so dass zwischen den beiden genannten Elementen eine Klemmverbindung ausgebildet wird, die die beiden Teile sicher zusammenhält. Für diesen Fall ist es üblicherweise nicht erforderlich, eine zusätzliche Verbindung, z.B. eine Klebeverbindung oder eine andere mechanische Verbindung, vorzusehen.

Bevorzugt ist das Dämpfungselement in Form eines aus Gummi bestehenden, vorzugsweise rotationssymmetrischen Körpers ausgebildet. Dadurch lässt sich eine besonders einfache und kostengünstige Fertigung des Dämpfungselements erzielen.

Die Erfindung umfasst auch einen Komfortantrieb in einem Kraftfahrzeug, wie einen Fensterheberantrieb, einen Sitzverstellungsantrieb, einen Schiebedachantrieb oder ähnliches mit einer erfindungsgemäßen Antriebseinrichtung.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Längsschnitt durch einen Teilbereich einer erfindungsgemäßen Getriebe-Antriebseinrichtung,
- Fig. 2: die Getriebe-Antriebseinrichtung gemäß Fig. 1 in einer teilweise geschnittenen Draufsicht,
- Fig. 3: Teile der Getriebe-Antriebseinrichtung gemäß der Fig. 1 und 2 in Einzeldarstellung zur Verdeutlichung des Wirkprinzips eines Anlauf- und eines Dämpfungselements,
- Fig. 4: ein Dämpfungselement und ein Anlaufelement in perspektivischer Ansicht in einer ersten Ausführungsform,
- Fig. 5: die Elemente gemäß Fig. 4 in montiertem Zustand in perspektivischer Ansicht,
- Fig. 6: ein gegenüber der Fig. 4 modifiziertes Dämpfungs- sowie Anlaufelement in perspektivischer Ansicht,
- Fig. 7: die Elemente gemäß Fig. 6 in montiertem Zustand in perspektivischer Ansicht,
- Fig. 8 und Fig. 9: einen Ausschnitt der Fig. 2 in vergrößerter Darstellung zur Verdeutlichung der Wirkungsweise des Dämpfungselements, des Anlaufelements bei unterschiedlichen axialen Belastungen einer Ankerwelle,
- Fig. 10 und Fig. 11: eine modifizierte Ausführungsform der Erfindung bei unterschiedlichen Stellungen der Ankerwelle, jeweils im Längsschnitt,
- Fig. 12: Teile der Anordnung gemäß Fig. 10 mit einer modifizierten Ankerwelle und einem modifizierten Anlaufelement in teilweise geschnittener Seitenansicht,
- Fig. 13 und Fig. 14: eine weitere abgewandelte Ausführungsform der Erfindung bei unterschiedlichen Stellungen der Ankerwelle, jeweils im Längsschnitt,
- Fig. 15 und Fig. 16: in Seitenansicht sowie Draufsicht ein Anlaufelement, wie es bei der Einrichtung gemäß Fig. 13 und 14 verwendet wird und
- Fig. 17 und Fig. 18: eine weitere abgewandelte Ausführungsform der Erfindung unter Verwendung einer Anlaufscheibe als Anlaufelement bei unterschiedlichen Stellungen der Ankerwelle, jeweils im Längsschnitt.

Gleiche Elemente bzw. Elemente mit der gleichen Funktion sind in den Figuren mit den gleichen Bezugsziffern versehen.

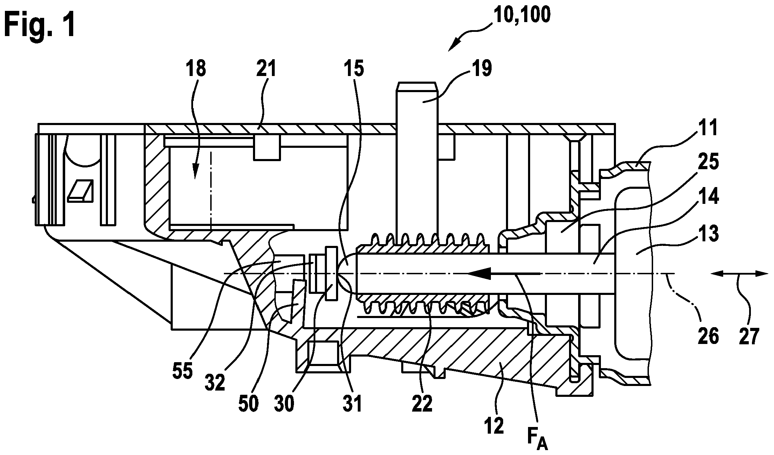

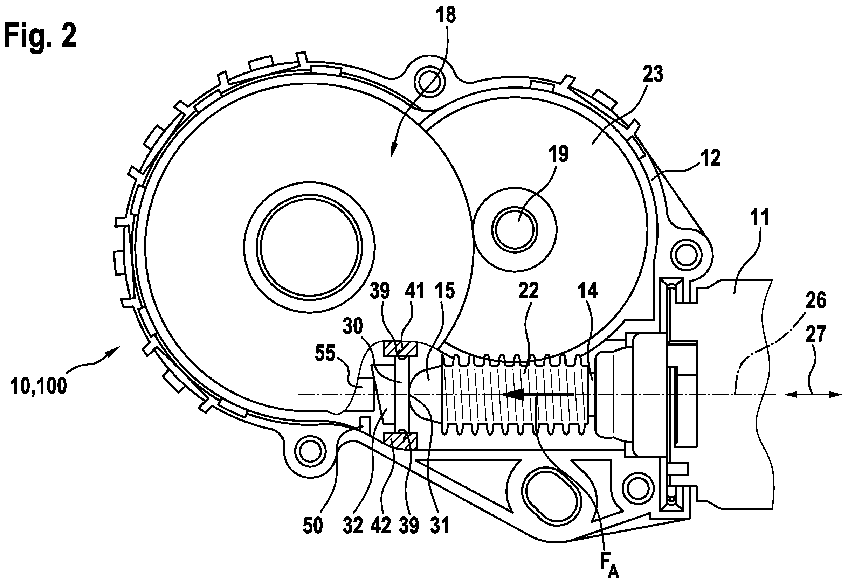

Die in den Fig. 1 und 2 dargestellte Getriebe-Antriebseinrichtung 10 ist Bestandteil eines Komfortantriebs 100 in einem Kraftfahrzeug. Unter einem Komfortantrieb 100 wird im Rahmen der Erfindung beispielhaft, jedoch nicht einschränkend, ein Fensterheberantrieb, ein Sitzverstellungsantrieb, ein Schiebedachantrieb oder ähnliches verstanden.

Die Getriebe-Antriebseinrichtung 10 umfasst einen als Elektromotor ausgebildeten, im Einzelnen nicht dargestellten Antriebsmotor, dessen Motor- bzw. Poltopfgehäuse 11 an ein Getriebegehäuse 12 angeflanscht ist. Innerhalb des Poltopfgehäuses 11 ist ein Anker 13 angeordnet, dessen Ankerwelle 14 mit ihrem ballig, d.h. gerundeten Wellenende 15 bis in das Getriebegehäuse 12 hineinragt.

In dem Getriebegehäuse 12 ist ein ein- oder mehrstufiges Getriebe 18 angeordnet, dessen Abtriebswelle 19 aus der Oberseite eines Getriebedeckels 21 herausragt, der Bestandteil des Getriebegehäuse 12 ist. Das Getriebe 18 dient der Herabsenkung der Drehzahl des Elektromotors unter gleichzeitiger Steigerung dessen Drehmoments. Hierzu weist die Ankerwelle 14 innerhalb des Getriebegehäuses 12 einen Teilabschnitt mit einer Schneckenverzahnung 22 auf, die mit einer entsprechenden Gegenverzahnung an einem als Stirnrad 23 ausgebildeten Getrieberad kämmt, das innerhalb des Getriebegehäuses 12 drehbar gelagert ist. Der aus dem Getriebegehäuse 12 herausragende Abschnitt der Abtriebswelle 19 ist zumindest mittelbar mit dem zu verstellenden Element, also beispielsweise einer Fensterscheibe oder einem Schiebedach, verbunden.

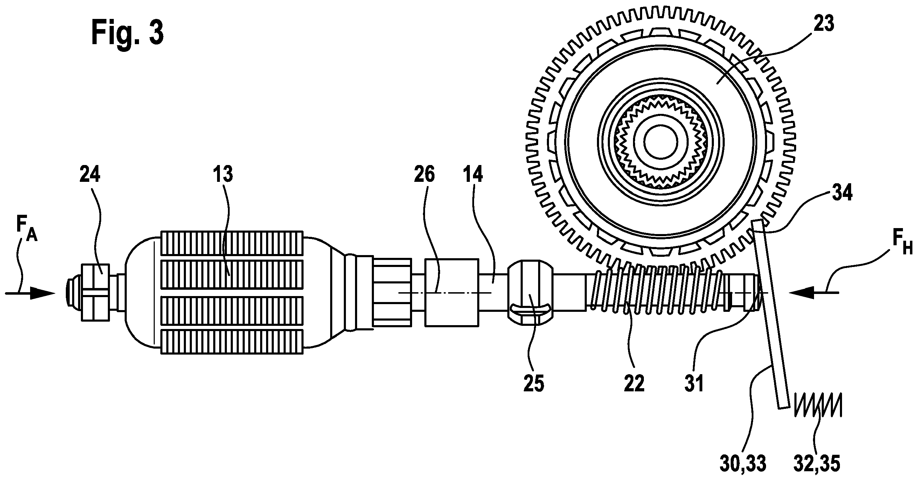

Entsprechend der Darstellung der Fig. 3 ist die Ankerwelle 14 zumindest in zwei Lagern 24, 25 radial gelagert, wobei sich das erste Lager 24 auf der dem Getriebegehäuse 12 abgewandten Seite des Ankers 13 im Bereich des Poltopfgehäuses 11 befindet. Das andere Lager 25 ist zwischen dem Bereich der Schneckenverzahnung 22 und dem Anker 13 angeordnet. Wesentlich ist, dass die beiden Lager 24, 25 lediglich der Aufnahme von auf die Ankerwelle 14 wirkenden Radialkräften ausgebildet sind, jedoch keine Axialkräfte aufnehmen können, die in Richtung der Längsachse 26 der Ankerwelle 14 wirken. Derartige, in Richtung des Doppelpfeils 27 wirkende Axialkräfte werden auf die Ankerwelle 14 insbesondere übertragen, wenn über die Abtriebswelle 19 von dem zu verstellenden Element (Fensterscheibe, Schiebedach usw.) bei stromlos geschalteter Getriebe-Antriebseinrichtung 10 eine Last in das Getriebe 18 eingeleitet wird.

Ergänzend wird erwähnt, dass es selbstverständlich im Rahmen der Erfindung liegt, mehr als zwei Lager 24, 25 zu verwenden.

Erfindungsgemäß berührt das ballig ausgebildete Wellenende 15 der Ankerwelle 14 ein Anlaufelement 30 in einem Anlagepunkt 31. Das Anlaufelement 30 ist wiederum auf der dem Wellenende 15 abgewandten Seite in Wirkverbindung mit einem Dämpfungselement 32 angeordnet. Die Kombination aus dem Anlaufelement 30 und dem Dämpfungselement 32 dient dazu, in Abhängigkeit von den in die Ankerwelle 14 in Richtung zum Anlaufelement 30 eingeleiteten Axialkräften F_{A} ein Hemmmoment bzw. eine Selbsthemmung zu erzeugen, die einer Drehung der Getrieberäder des Getriebes 18 bzw. der Abtriebswelle 19 entgegenwirkt.

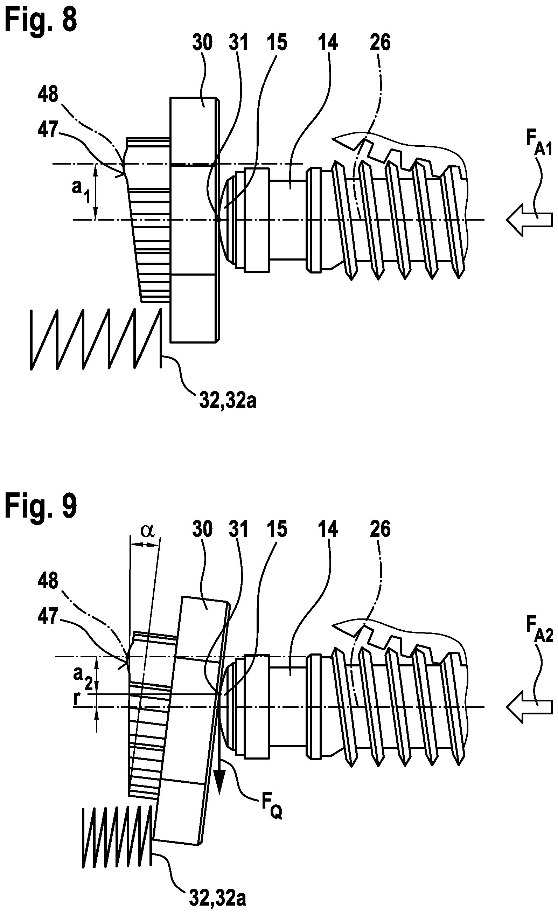

Das Wirkprinzip des Anlaufelements 30 und des Dämpfungselements 23 wird nachfolgend anhand der Fig. 3 verdeutlicht, wobei in dem in der Fig. 3 dargestellten Ausführungsbeispiel das Anlaufelement 30 als Anlageplatte 33 ausgebildet ist, die in dem Getriebegehäuse 12 auf nicht dargestellte Art und Weise in einer Kippachse 34, die senkrecht zur Zeichenebene der Fig. 3 verläuft, kipp- bzw. schwenkbar angeordnet ist. Auf der der Kippachse 34 gegenüberliegenden Seite der Anlageplatte 33 ist diese mit einem als Druckfeder 35 ausgebildeten Dämpfungselement 32 wirkverbunden angeordnet. Wird nun auf die Ankerwelle 14 eine Axialkraft F_{A} in Richtung auf die Anlageplatte 33 ausgeübt, so wandert der Anlagepunkt 31, welcher bei einer nicht vorhandenen bzw. geringen Axialkraft F_{A} in der Längsachse 26 der Ankerwelle 14 verläuft, entsprechend der Auslenkung der Anlageplatte 33 um die Kippachse 34 in Richtung zur Kippachse 34 hin, so dass zwischen der Längsachse 26 und dem Anlagepunkt 31 ein mit zunehmender Axialkraft F_{A} größerer Abstand r ausgebildet wird, wie dies auch besonders deutlich aus den Fig. 8 und 9 erkennbar ist. Dabei wird auf das Wellenende 15 bzw. die Ankerwelle 14 eine Gegenkraft F_{H} von der Anlageplatte 33 her erzeugt, die umso größer ist, je größer der Radius r ist. Insbesondere steigt die Reaktionskraft, die zur Selbsthemmung des Getriebes 18 führt, infolge des mit größerer Axialkraft F_{A} größeren Radius r überproportional zur Axialkraft F_{A}.

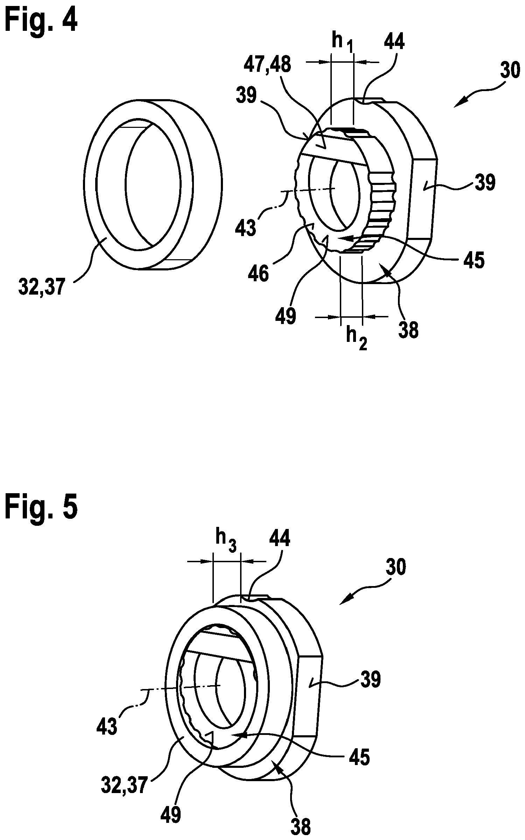

Bei dem in den Fig. 4 und 5 dargestellten Dämpfungselement 32 ist dieses aus einem elastischen Material, insbesondere aus Gummi, hergestellt und in Form eines Rings 37 ausgebildet. Das Anlaufelement 30 weist einen plattenförmigen Abschnitt 38 auf, der auf einander gegenüberliegenden Seiten jeweils mit einer Abflachung 39 versehen ist. Der plattenförmige Abschnitt 38 des Anlaufelements 30 ist entsprechend der Fig. 2 mit seinen beiden Abflachungen 39 zwischen den Anlageflächen zweier gehäusefester Führungselemente 41, 42 formschlüssig aufgenommen, sodass ein Verdrehen des Anlaufelements 30 um seine Längsachse 43 nicht möglich ist. Beispielhaft auf einer Oberseite des plattenförmigen Abschnitts 38 weist dieser eine als Positionierelement dienende Einkerbung 44 auf, die der lagerichtigen Montage des Anlaufelements 30 dient, indem beispielsweise ein entsprechendes Gegenelement an dem Getriebedeckel 21 mit der Einkerbung 44 zusammenwirkt, so dass nur in einer Stellung die Montage des Getriebedeckels 21 ermöglicht wird.

Auf der dem Wellenende 15 abgewandten Seite weist der plattenförmige Abschnitt 38 einen ringförmigen Abschnitt 45 auf, der in Bezug zur Längsachse 43 des Anlaufelements 30 eine schräg angeordnete Stirnseite 46 aufweist. So ist die Höhe h₁ auf der der Einkerbung 44 zugewandten Seite des ringförmigen Abschnitts 45 größer als die Höhe h₂ auf der der Einkerbung 44 abgewandten Seite. In dem Bereich der Stirnseite 46, die auf der der Einkerbung 44 zugewandten Seite liegt, weist die Stirnseite 46 eine senkrecht zu den Abflachungen 39 ausgerichtete Anlagefläche 47 auf, die eine Kippachse 48 ausbildet. Entsprechend der Darstellung der Fig. 5 weist der Ring 37 eine Höhe h₃ auf, die in etwa der Höhe h₁ des Abschnitts 45 entspricht oder etwas größer als die Höhe h₁ ist. Weiterhin ist der Innendurchmesser des Rings 37 derart auf dem Außendurchmesser des ringförmigen Abschnitts 45 angepasst, dass bei auf dem ringförmigen Abschnitt 45 montiertem Ring 37 zwischen dem Ring 37 und dem Anlageelement 30 eine Formschlussverbindung in Form eines Klemmschlusses ausgebildet ist. Die Stirnseite 46 bildet auf der der Anlagefläche 47 gegenüberliegenden Seite eine Anschlagfläche 49 aus, die den Kippwinkel α, um den das Anlaufelement 30 mit dem Dämpfungselement 32 geschwenkt werden kann, durch Anlage an wenigstens ein, in den Fig. 1 und 2 erkennbares gehäusefestes Anschlagelement 50 begrenzt. Das Kippen des Anlaufelements 30 erfolgt, sobald dieses mit seiner Anlagefläche 47 nach einer Kompression des Dämpfungselements 32, welches auf der dem Anlaufelement 30 abgewandten Stirnseite an einem nicht gezeigten, ortsfesten Gegenelement anliegt, an einem ebenfalls ortsfest in dem Getriebegehäuse 12 angeordneten, in den Fig. 1 und 2 erkennbaren Gegenelement 55 anliegt.

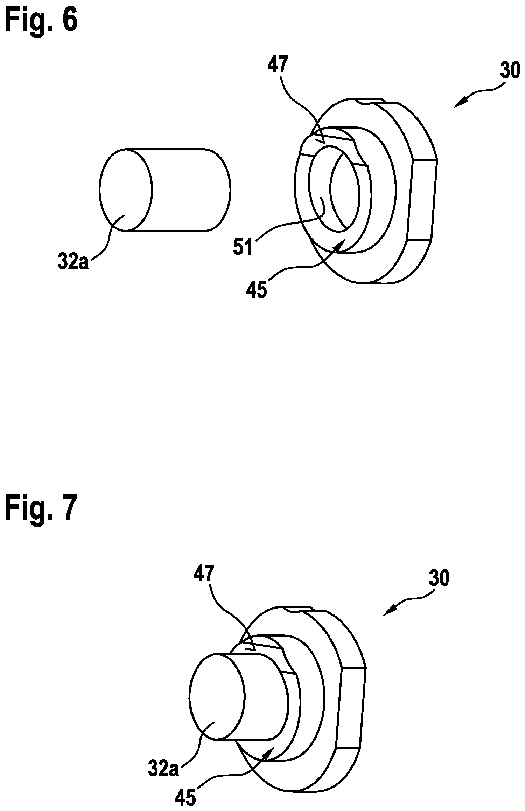

Das in den Fig. 6 und 7 erkennbare Dämpfungselement 32a unterscheidet sich von dem Dämpfungselement 32 dadurch, dass dieses als zylindrisches Dämpfungselement 32a ausgebildet ist, das in die Öffnung 51 des ringförmigen Abschnitts 45 des Anlaufelements 30 unter Ausbildung eines Klemmschlusses einführbar ist. Das Dämpfungselement 32a ragt aus der Öffnung 51 heraus und überragt insbesondere auch die Anlagefläche 47 in axialer Richtung.

In den Fig. 8 und 9 ist die Wirkungsweise des Anlaufelements 30 in Verbindung mit den als Federelementen dargestellten Dämpfungselementen 32, 32a erläutert: In der Fig. 8 wirkt auf die Ankerwelle 14 eine Axialkraft F_{A1} die eine Kompression des Dämpfungselements 32, 32a bewirkt, derart, dass die Anlagefläche 47 noch nicht in Wirkverbindung mit dem gehäusefesten, nicht dargestellten Anschlagelement 50 ist. Der Kippwinkel α beträgt somit 0°. Nichtsdestotrotz wird von dem Anlaufelement 30 eine Gegenkraft in Richtung des Wellenendes 15 erzeugt, die von den Reibwerten zwischen dem Wellenende 15 und dem Anlaufelement 30 abhängig ist. Weiterhin erkennt man, dass der Anlagepunkt 31 mit der Längsachse 26 der Ankerwelle 14 fluchtet, sodass sich zwischen der Kippachse 48 und dem Anlagepunkt 31 ein Abstand a₁ bzw. zwischen der Längsachse 26 der Ankerwelle 14 und dem Anlagepunkt 31 ein Abstand r von Null einstellt.

In der Fig. 9 wirkt auf die Ankerwelle 14 eine Axialkraft F_{A2}, die größer ist als die Axialkraft F_{A1} bei der Fig. 8. Insbesondere die Axialkraft F_{A2} derart groß, dass die Anlagefläche 47 des Anlaufelements 30 in Wirkverbindung mit dem gehäusefesten Anschlagelement 50 ist, so dass ein Kippen des Anlaufelements 30 um die Kippachse 48 um den Kippwinkel α stattgefunden hat. Weiterhin erkennt man, dass der Anlagepunkt 31 nicht mehr mit der Längsachse 26 der Ankerwelle 14 fluchtet, sondern einen Abstand a₂ zur Kippachse 50 aufweist, der kleiner ist als der Abstand a₁ bei der Fig. 8, bzw. dass sich ein Abstand r zwischen der Längsachse 26 der Ankerwelle 14 und dem Anlagepunkt 31 ergibt. Dieser verringerte Abstand a₂ bzw. der (vergrößerte) Abstand r bewirkt eine überproportionale Erhöhung der Reaktionskraft des Anlaufelements 30 auf die Ankerwelle 14 durch ein Reibmoment, so dass auch die Höhe der Selbsthemmung überproportional größer ist als bei der Fig. 8. Weiterhin wird eine senkrecht zur Längsachse 26 der Ankerwelle 14 angeordnete Querkraftkomponente F_{Q} in Anlagepunkt 31 erzeugt, die eine Radialbelastung der Lager 24, 25, und somit ebenfalls eine erhöhte Reibung der Ankerwelle 14 in den Lagern 24, 25 erzeugt.

Ergänzend wird erwähnt, dass bei dem dargestellten Ausführungsbeispiel lediglich an einem Wellenende 15 ein Anlaufelement 30 angeordnet bzw. vorgesehen ist. Sollen auch Axialkräfte F_{A}, die nicht in Richtung des Anlaufelements 30, sondern entgegen des Anlaufelements 30 auf die Ankerwelle 14 wirken, zu einer Selbsthemmung des Getriebes 18 führen, so ist es erforderlich, auch das andere (in den Figuren nicht dargestellte) Wellenende mit einem entsprechenden Anlaufelement 30 sowie einem Dämpfungselement 32, 32a zu versehen.

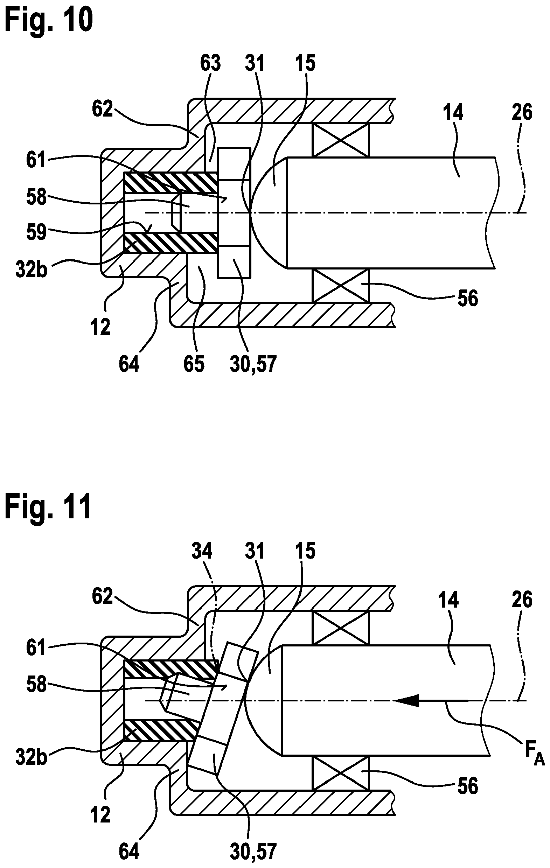

In den Fig. 10 und 11 ist ein Teil einer modifizierten Getriebe-Antriebseinrichtung 10 dargestellt. Man erkennt in einem einen verkleinerten Querschnitt aufweisenden Bereich beispielsweise des Getriebegehäuses 12 die Ankerwelle 14, die in einem Radiallager 56 gelagert ist. Das ballig ausgebildete Wellenende 15 wirkt mit einem als Anlaufscheibe 57 ausgebildeten Anlaufelement 30 zusammen, das mit einem zapfenförmigen Fortsatz 58 zur Führung und Positionierung der Anlaufscheibe 57 in eine Durchgangsöffnung 59 des Dämpfungselements 32b hineinragt. Die Anordnung des Dämpfungselements 32b mit seiner Längsachse ist fluchtend zur Längsachse 26 der Ankerwelle 14. Die Anlaufscheibe 57 weist auf zwei, parallel zur Zeichnungsebene der Fig. 10 und 11 verlaufenden, gegenüberliegenden Seiten jeweils eine Abflachung 61 auf, die mit dem Getriebegehäuse 12 bzw. jeweils einer Seitenwand des Getriebegehäuses 12 zusammenwirkt, um eine Verdrehsicherung der Anlaufscheibe 57 auszubilden. Im unbelasteten Zustand der Ankerwelle 14 weist die Anlaufscheibe 57 zu einer ersten Stirnwand 62 des Getriebegehäuses 12 einen Spalt 63 auf, der in Abänderung des dargestellten Ausführungsbeispiels jedoch auch Null (bei kürzerem Dämpfungselement 32b) sein kann. Auf der dem Spalt 63 gegenüberliegenden Seite der Anlaufscheibe 57 ist zwischen der Anlaufscheibe 57 und einer, axial zurückgesetzten zweiten Stirnwand 64 ein zweiter Spalt 65 ausgebildet, der größer ist als der Spalt 63. Bei einer Axialbelastung der Ankerwelle 14 durch die Axialkraft F_{A} entsprechend der Fig. 11 drückt das Wellenende 15 der Ankerwelle 14 gegen die Anlaufscheibe 57, wobei der Anlagepunkt 31 des Wellenendes 15 an der Anlaufscheibe 57 aus der in der Fig. 10 dargestellten, fluchtend zur Längsachse 26 verlaufenden Position nach außen unter Ausbildung eines Abstands r wandert. Wesentlich dabei ist auch, dass das Kippen der Anlaufscheibe 57 um ihre senkrecht zur Zeichenebene der Fig. 11 verlaufende Kippachse 34 spätestens dann erfolgt, wenn die Anlaufscheibe 57 an der ersten Stirnwand 62 anliegt. Weiterhin bildet die zweite Stirnwand 64, wie in der Fig. 11 erkennbar ist, einen gehäusefesten Anschlag zur Begrenzung des Kippwinkels α der Anlaufscheibe 57 aus.

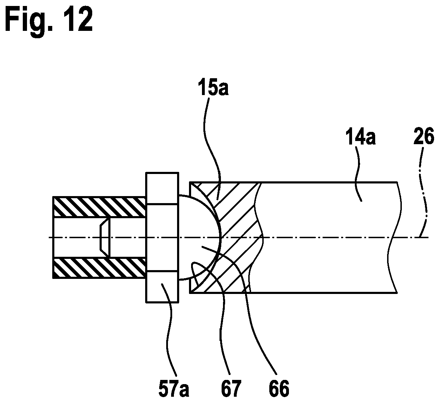

Das in der Fig. 12 abgewandelte Ausführungsbeispiel zeigt eine Anlaufscheibe 57a als Anlaufelement 30 mit einem zur Ankerwelle 14a ballig bzw. kugelabschnittsförmig ausgebildeten Endbereich 66. Der Endbereich 66 wälzt auf einer konkav ausgebildeten Ausnehmung 67 des Wellenendes 15a der Ankerwelle 14a ab.

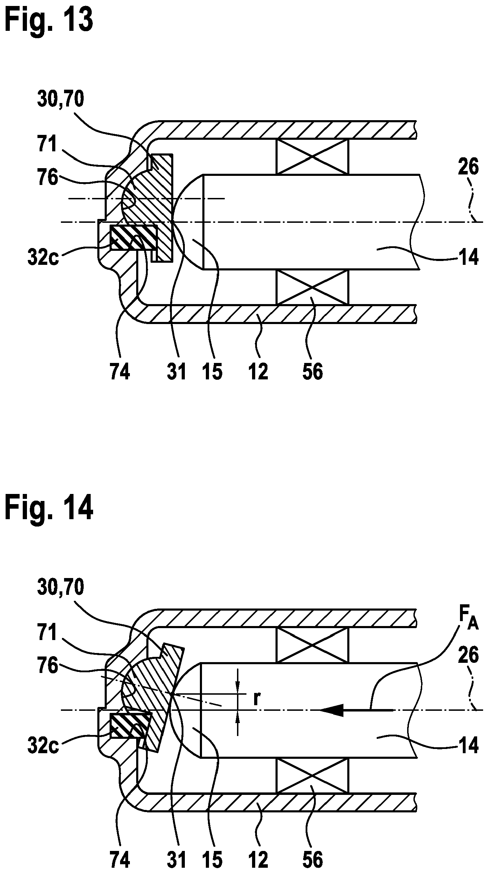

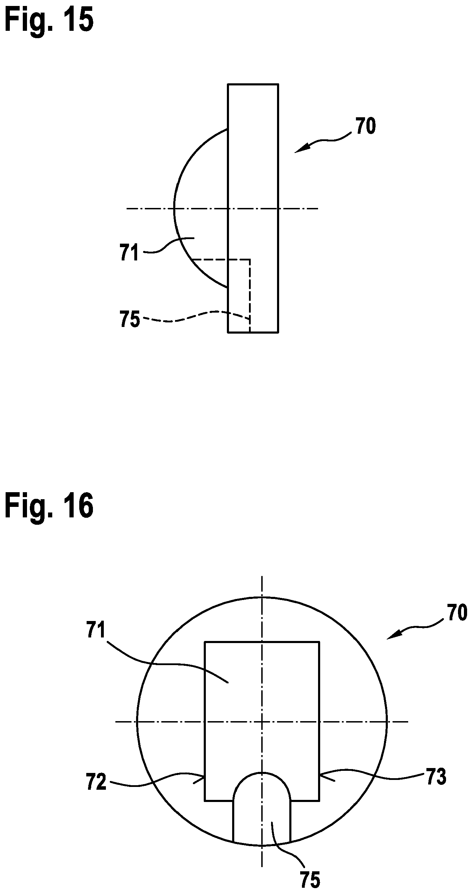

In den Fig. 13 bis 16 ist eine weitere modifizierte Getriebe-Antriebseinrichtung 10 mit einer Anlaufscheibe 70 als Anlaufelement 30 dargestellt, die auf der dem Getriebegehäuse 12 zugewandten Seite einen gerundet ausgebildeten Fortsatz 71 mit zwei parallel zueinander angeordneten Seitenflächen 72, 73 (Fig. 16) aufweist. Die Seitenflächen 72, 73 liegen formschlüssig an nicht dargestellten Begrenzungen bzw. Wänden des Getriebegehäuses 12 zur Ausbildung einer Verdrehsicherung der Anlaufscheibe 70 an. Weiterhin ist auf der dem Getriebegehäuse 12 zugewandten Seite der Anlaufscheibe 72 in dem Getriebegehäuse 12 eine Ausnehmung 74 zur formschlüssigen Aufnahme des Dämpfungselements 32c angeordnet. Das Dämpfungselement 32c liegt auf der der Anlaufscheibe 70 zugewandten Seite in einer weiteren Ausnehmung 75 der Anlaufscheibe 70 bereichsweise an. Wesentlich ist, dass bei unbelasteter Ankerwelle entsprechend der Darstellung der Fig. 13 der Anlagepunkt 31 zwischen der Ankerwelle 14 bzw. dem Wellenende 15 der Ankerwelle 14 und der Anlaufscheibe 70 mit der Längsachse 26 der Ankerwelle 14 fluchtet. Bei einer Axialbelastung der Ankerwelle 14 entsprechend der Fig. 14 mit einer Axialkraft F_{A} schwenkt die Anlaufscheibe 70 innerhalb einer in dem Getriebegehäuse 12 ausgebildeten konkaven Aufnahme 76, wobei der Anlagepunkt 31 aus der Längsachse 26 in der Zeichnungsebene der Fig. 14 unter Ausbildung eines Abstands r nach oben wandert. Darüber hinaus ist in der Fig. 14 der maximale Kippwinkel α der Anlaufscheibe 70 dargestellt, bei der die Anlaufscheibe 70 auf der dem Dämpfungselement 32c zugewandten Seite an dem Getriebegehäuse 12 anliegt.

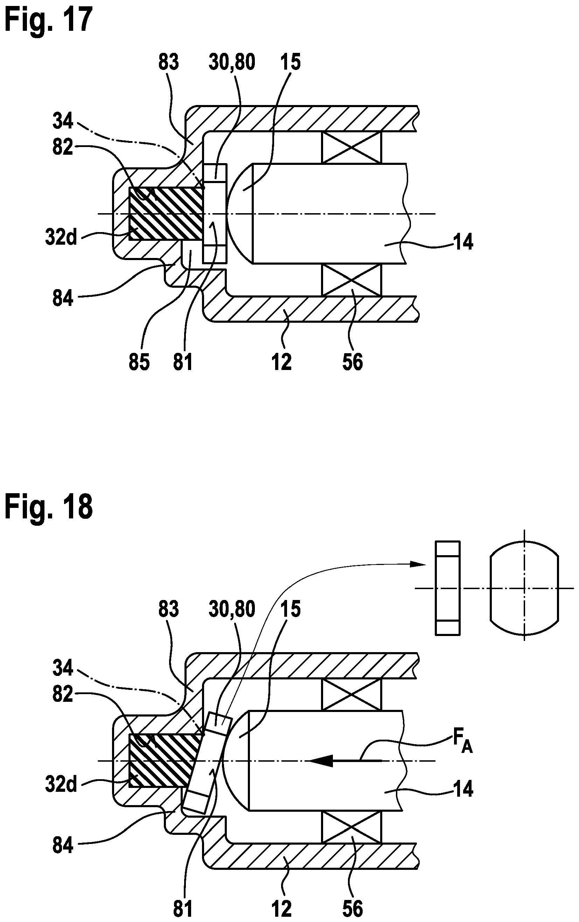

Zuletzt ist in den Fig. 17 und 18 eine weitere Ausführungsform der Erfindung dargestellt, bei der eine Anlaufscheibe 80 als Anlaufelement 30 zwei, parallel zur Zeichenebene der Fig. 17 und 18 angeordnete Abflachungen 81 aufweist, die in Analogie zu den Abflachungen 61 formschlüssig an Abschnitten des Gewindegehäuses 12 zur Ausbildung einer Verdrehsicherung der Anlaufscheibe 80 anliegen. Das Dämpfungselement 32d ist in einer Aufnahme 82 des Getriebegehäuses 12 aufgenommen und schließt in unbelastetem Zustand der Ankerwelle 14 bündig mit einer ersten Stirnwand 83 des Getriebegehäuses 12 ab. Zwischen der Anlaufscheibe 80 und dem Getriebegehäuse 12 ist auf der der ersten Stirnwand 83 gegenüberliegenden Seite bei unbelastetem Zustand der Ankerwelle 14 zu einer zweiten Stirnwand 84 ein Spalt 85 ausgebildet. In unbelastetem Zustand der Ankerwelle 14 ist die Anlaufscheibe 80 durch Klemmschluss zwischen dem Dämpfungselement 32d und dem balligen Wellenende 15 der Ankerwelle 14 gehalten. Bei einer Axialbelastung der Ankerwelle 14 durch eine Axialkraft F_{A} entsprechend der Darstellung der Fig. 18 kippt die Anlaufscheibe 80 um ihre Kippachse 34 (Übergang der Stirnwand 83 zur Aufnahme 82), bis der maximale Kippwinkel α erreicht ist, bei der die Anlaufscheibe 80 an der zweiten Stirnwand 84 anliegt.

Weiterhin wird erwähnt, dass die soweit beschriebene Getriebe-Antriebseinrichtung 10 in vielfältiger Art und Weise abgewandelt bzw. modifiziert werden kann, ohne vom Erfindungsgedanken abzuweichen. Insbesondere kann es bei allen Ausführungsformen vorgesehen sein, dass das Anlaufelement 30 zur Ausbildung einer punktförmigen Anlage an dem Wellenende 15 gerundet bzw. ballig ausgebildet sein kann. In diesem Fall ist das Wellenende 15 vorzugsweise, jedoch nicht einschränkend, mit einer flachen Anlagefläche ausgestattet.

## Patentansprüche

1. Getriebe-Antriebseinrichtung (10), mit einer in Richtung ihrer Längsachse (26) in einem Gehäuse (12) längsverschiebbar angeordneten Welle (14; 14a), mit einem stirnseitigen ausgebildeten Wellenende (15; 15a), das sich über wenigstens ein Anlaufelement (30) zumindest mittelbar an dem Gehäuse (12) abstützt, wobei entweder das Wellenende (15) oder das Anlaufelement (30) zumindest bereichsweise gerundet ausgebildet ist, wobei zwischen dem Anlaufelement (30) und dem Wellenende (15; 15a) ein Anlagepunkt (31) ausgebildet ist, und wobei das Anlaufelement (30) mit einem Dämpfungselement (32; 32a bis 32d) gekoppelt ist, das eine Bewegung des Anlaufelements (30) bei einer axialen Kraftbeaufschlagung (F_{A}, F_{A1}, F_{A2}) durch die Welle (14; 14a) ermöglicht,
wobei das Anlaufelement (30) und/oder das Dämpfungselement (32; 32a bis 32d) derart ausgebildet und/oder angeordnet sind/ist, dass bei zunehmender axialer Kraftbeaufschlagung (F_{A}, F_{A1}, F_{A2}) zumindest ab einer bestimmten Höhe der Kraftbeaufschlagung (F_{A}, F_{A1}, F_{A2}) der Anlagepunkt (31) einen zunehmenden Abstand (r) zur Längsachse (26) der Welle (14; 14a) aufweist, wobei
das Anlaufelement (30) um eine mit einem Abstand (a₁) zur Längsachse (26) der Welle (14; 14a) angeordnete Achse (34) kippbeweglich ausgebildet ist, und bei zunehmender axialer Kraftbeaufschlagung auf die Welle (14, 14a) eine senkrecht zur Längsachse (26) der Welle (14, 14a) gerichtete Querkraftkomponente erzeugt wird, die bei Radiallagern der Welle (14, 14a) zu einer erhöhten Reibung in den Radiallagern führt, die eine Selbsthemmung der Getriebe-Antriebseinrichtung erhöht.

2. Getriebe-Antriebseinrichtung nach Anspruch 1,
**dadurch gekennzeichnet, dass** die Welle (14; 14a) als Ankerwelle (14) eines Elektromotors ausgebildet ist und innerhalb des als Getriebegehäuse ausgebildeten Gehäuses (12) einen Teilabschnitt mit einer Schneckenverzahnung (22) aufweist, die mit einer entsprechenden Gegenverzahnung an einem als Stirnrad (23) ausgebildeten Getrieberad kämmt, das innerhalb des Gehäuses (12) drehbar gelagert ist.

3. Getriebe-Antriebseinrichtung nach Anspruch 1 oder 2,
**dadurch gekennzeichnet,**
**dass** das Dämpfungselement (32; 32a bis 32d) auf der dem Wellenende (15; 15a) abgewandten Seite des Anlaufelements (30) angeordnet ist.

4. Getriebe-Antriebseinrichtung nach Anspruch 2 oder 3,
**dadurch gekennzeichnet,**
**dass** das Anlaufelement (30) eine Anlagefläche (47) aufweist, die dazu ausgebildet ist, ab einer bestimmten Kraftbeaufschlagung (F_{A}, F_{A1}, F_{A2}) an einem ortsfesten Gegenelement (55; 64; 84) zumindest bereichsweise anzuliegen, so dass das Anlaufelement (30) um die an der Anlagefläche (47) ausgebildete Achse (34) kippbar ist.

5. Getriebe-Antriebseinrichtung nach einem der Ansprüche 1 bis 4,
**dadurch gekennzeichnet,**
**dass** das Anlaufelement (30) in dem Gehäuse (12) mittels wenigstens einer Anlagefläche (39; 61; 72, 73; 81) verdrehsicher angeordnet ist, die an einer Gegenfläche (41, 42) im Gehäuse (12) anliegt.

6. Getriebe-Antriebseinrichtung nach einem der Ansprüche 1 bis 5,
**dadurch gekennzeichnet,**
**dass** das Anlaufelement (30) ein Positionierelement (44) zur lagerichtigen Montage im Gehäuse (12) aufweist.

7. Getriebe-Antriebseinrichtung nach einem der Ansprüche 2 bis 6,
**dadurch gekennzeichnet,**
**dass** das Anlaufelement (30) eine Anschlagfläche (49) zur Begrenzung des Kippwinkels (α) des Anlaufelements (30) um die Kippachse (34) aufweist.

8. Getriebe-Antriebseinrichtung nach einem der Ansprüche 1 bis 7,
**dadurch gekennzeichnet,**
**dass** das Dämpfungselement (32; 32a; 32b) mit dem Anlaufelement (30) zumindest über eine Formschlussverbindung miteinander verbunden ist, oder dass das Dämpfungselement (32c; 32d) in einer Aufnahme (74; 82) im Gehäuse (12) aufgenommen ist.

9. Getriebe-Antriebseinrichtung nach einem der Ansprüche 1 bis 8,
**dadurch gekennzeichnet,**
**dass** das Dämpfungselement (32; 32a bis 32d) in Form eines aus Gummi bestehenden, vorzugsweise rotationssymmetrischen Körpers ausgebildet ist.

10. Komfortantrieb (100) in einem Kraftfahrzeug, wie Fensterheberantrieb, Sitzverstellungsantrieb, Schiebedachantrieb, mit einer Getriebe-Antriebseinrichtung (10) nach einem der Ansprüche 1 bis 9.

## Claims

1. Transmission drive device (10), with a shaft (14; 14a) which is arranged in a longitudinally displaceable manner in the direction of the longitudinal axis (26) thereof in a housing (12), with a shaft end (15; 15a) which is formed on the end side and is supported at least indirectly on the housing (12) via at least one starting element (30), wherein either the shaft end (15) or the starting element (30) is of rounded design at least in regions, wherein a bearing point (31) is formed between the starting element (30) and the shaft end (15; 15a), and wherein the starting element (30) is coupled to a damping element (32; 32a to 32d) which permits a movement of the starting element (30) in the event of an axial application of force (F_{A}, F_{A1}, F_{A2}) by means of the shaft (14; 14a),
wherein the starting element (30) and/or the damping element (32; 32a to 32d) are/is designed and/or arranged in such a manner that, as the axial application of force (F_{A}, F_{A1}, F_{A2}) increases, the bearing point (31) is at an increasing distance (r) from the longitudinal axis (26) of the shaft (14; 14a), at least from a certain level of the application of force (F_{A}, F_{A1}, F_{A2}),
wherein the starting element (30) is designed to be tiltable about an axis (34) arranged at a distance (a₁) from the longitudinal axis (26) of the shaft (14; 14a), and, as axial application of force on the shaft (14; 14a) increases, a transverse force component which is directed perpendicularly to the longitudinal axis (26) of the shaft (14; 14a) and which, in the case of radial bearings of the shaft (14; 14a), leads to increased friction in the radial bearings, which increases a self-locking of the transmission drive device, is produced.

2. Transmission drive device according to Claim 1, **characterized in that** the shaft (14; 14a) is designed as an armature shaft (14) of an electric motor and, within the housing (12) designed as a transmission housing, has a partial section with a worm toothing (22) which meshes with a corresponding mating toothing on a gear wheel which is designed as a spur gear (23) and is mounted rotatably within the housing (12).

3. Transmission drive device according to Claim 1 or 2, **characterized in that** the damping element (32; 32a to 32d) is arranged on that side of the starting element (30) which faces away from the shaft end (15; 15a).

4. Transmission drive device according to Claim 2 or 3, **characterized in that** the starting element (30) has a bearing surface (47) which is designed, from a certain application of force (F_{A}, F_{A1}, F_{A2}), to bear at least in regions against a positionally fixed mating element (55; 64; 84) such that the starting element (30) is tiltable about the axis (34) formed on the bearing surface (47).

5. Transmission drive device according to one of Claims 1 to 4, **characterized in that** the starting element (30) is arranged in a torsion proof manner in the housing (12) by means of at least one bearing surface (39; 61; 72, 73; 81) which bears against a mating surface (41, 42) in the housing (12).

6. Transmission drive device according to one of Claims 1 to 5, **characterized in that** the starting element (30) has a positioning element (44) for the positionally correct installation in the housing (12).

7. Transmission drive device according to one of Claims 2 to 6, **characterized in that** the starting element (30) has a stop surface (49) for limiting the tilting angle (α) of the starting element (30) about the tilting axis (34).

8. Transmission drive device according to one of Claims 1 to 7, **characterized in that** the damping element (32; 32a; 32b) is connected to the starting element (30) to each other at least via a form-fitting connection, or **in that** the damping element (32c; 32d) is accommodated in a receptacle (74; 82) in the housing (12).

9. Transmission drive device according to one of Claims 1 to 8, **characterized in that** the damping element (32; 32a to 32d) is designed in the form of a preferably rotationally symmetrical body composed of rubber.

10. Comfort drive (100) in a motor vehicle, such as power window drive, seat adjustment drive, sliding roof drive, with a transmission drive device (10) according to one of Claims 1 to 9.

## Revendications

1. Dispositif d'entraînement de transmission (10) comprenant un arbre (14 ; 14a) disposé de manière déplaçable longitudinalement dans la direction de son axe longitudinal (26) dans un boîtier (12), avec une extrémité d'arbre (15 ; 15a) réalisée du côté frontal, qui s'appuie par le biais d'au moins un élément de butée (30) au moins indirectement contre le boîtier (12), soit l'extrémité d'arbre (15) soit l'élément de butée (30) étant réalisé au moins en partie sous forme arrondie, entre l'élément de butée (30) et l'extrémité d'arbre (15 ; 15a) étant réalisé un point d'appui (31) et l'élément de butée (30) étant accouplé à un élément d'amortissement (32 ; 32a à 32d) qui permet un déplacement de l'élément de butée (30) dans le cas d'une sollicitation par force axiale (F_{A}, F_{A1}, F_{A2}) par l'arbre (14 ; 14a),
l'élément de butée (30) et/ou l'élément d'amortissement (32 ; 32a à 32d) étant réalisés et/ou disposés de telle sorte que pour une sollicitation par force axiale (F_{A}, F_{A1}, F_{A2}) croissante, au moins à partir d'un niveau déterminé de la sollicitation par force (F_{A}, F_{A1}, F_{A2}), le point d'appui (31) présente une distance (r) croissante à l'axe longitudinal (26) de l'arbre (14 ; 14a),
l'élément de butée (30) étant réalisé de manière à pouvoir être déplacé par basculement autour d'un axe (34) disposé à une distance (a₁) par rapport à l'axe longitudinal (26) de l'arbre (14 ; 14a), et, dans le cas d'une sollicitation par force axiale croissante, une composante de force transversale orientée perpendiculairement à l'axe longitudinal (26) de l'arbre (14, 14a) étant appliquée à l'arbre (14, 14a), laquelle entraîne, au niveau des paliers radiaux de l'arbre (14, 14a), un frottement accru dans les paliers radiaux, lequel augmente un auto-blocage du dispositif d'entraînement de transmission.

2. Dispositif d'entraînement de transmission selon la revendication 1,
**caractérisé en ce que** l'arbre (14 ; 14a) est réalisé sous forme d'arbre d'induit (14) d'un moteur électrique et présente, à l'intérieur du boîtier (12) réalisé sous forme de boîtier de transmission, une portion partielle avec une denture de vis sans fin (22) qui s'engrène avec une denture conjuguée correspondante au niveau d'une roue de transmission réalisée en tant que pignon droit (23) qui est supportée de manière rotative à l'intérieur du boîtier (12).

3. Dispositif d'entraînement de transmission selon la revendication 1 ou 2,
**caractérisé en ce que**
l'élément d'amortissement (32 ; 32a à 32d) est disposé du côté de l'élément de butée (30) opposé à l'extrémité d'arbre (15 ; 15a).

4. Dispositif d'entraînement de transmission selon la revendication 2 ou 3,
**caractérisé en ce que**
l'élément de butée (30) présente une surface d'appui (47) qui est réalisée pour s'appliquer au moins en partie contre un élément conjugué fixe (55 ; 64 ; 84) à partir d'une sollicitation de force déterminée (F_{A}, F_{A1}, F_{A2}), de telle sorte que l'élément de butée (30) puisse basculer autour de l'axe (34) réalisé au niveau de la surface d'appui (47).

5. Dispositif d'entraînement de transmission selon l'une quelconque des revendications 1 à 4,
**caractérisé en ce que**
l'élément de butée (30) est disposé de manière solidaire en rotation dans le boîtier (12) au moyen d'au moins une surface d'appui (39 ; 61 ; 72, 73 ; 81), qui s'applique contre une surface conjuguée (41, 42) dans le boîtier (12).

6. Dispositif d'entraînement de transmission selon l'une quelconque des revendications 1 à 5,
**caractérisé en ce que**
l'élément de butée (30) présente un élément de positionnement (44) pour le montage en position correcte dans le boîtier (12).

7. Dispositif d'entraînement de transmission selon l'une quelconque des revendications 2 à 6,
**caractérisé en ce que**
l'élément de butée (30) présente une surface d'arrêt (49) pour limiter l'angle de basculement (α) de l'élément de butée (30) autour de l'axe de basculement (34).

8. Dispositif d'entraînement de transmission selon l'une quelconque des revendications 1 à 7,
**caractérisé en ce que**
l'élément d'amortissement (32 ; 32a ; 32b) est connecté à l'élément de butée (30) ensemble au moins par le biais d'une connexion par engagement mutuel par correspondance de formes, ou **en ce que** l'élément d'amortissement (32c ; 32d) est reçu dans un logement (74 ; 82) dans le boîtier (12).

9. Dispositif d'entraînement de transmission selon l'une quelconque des revendications 1 à 8,
**caractérisé en ce que**
l'élément d'amortissement (32 ; 32a à 32d) est réalisé sous la forme d'un corps constitué de caoutchouc, de préférence à symétrie de révolution.

10. Entraînement de confort (100) dans un véhicule automobile, par exemple entraînement de lève-glace, entraînement de réglage de siège, entraînement de toit ouvrant, comprenant un dispositif d'entraînement de transmission (10) selon l'une quelconque des revendications 1 à 9.
